# FASCICULE DE BREVET EUROPEEN

(11) **EP 0 696 252 B1**
(45) Date de publication et mention de la délivrance du brevet: **13.11.1996**
(21) Numéro de dépôt: 94915182.3
(22) Date de dépôt: 27.04.1994
(51) Int. Cl.: B64G 1/24

(54) **SATELLITE ARTIFICIEL MUNI DE GOUVERNES AERODYNAMIQUES D'ORIENTATION**
SATELLIT MIT AERODYNAMISCHER STEUEREINRICHTUNG
MAN-MADE SATELLITE WITH AERODYNAMIC CONTROL VANES

(30) Priorité: 27.04.1993 FR 9304953
(43) Date de publication de la demande: 14.02.1996
(73) Titulaire: CENTRE NATIONAL D'ETUDES SPATIALES, F-75039 Paris Cedex 01 (FR)
(72) Inventeur: DUCHON, Paul, F-31810 Venerque (FR)
(74) Mandataire: Ilgart, Jean-Christophe
(86) Numéro de dépôt international: FR9400480
(87) Numéro de publication internationale: WO9425344

(56) Documents cités:
- EP-A- 0 076 179
- EP-A- 0 524 888
- FR-A- 2 530 046
- US-A- 3 258 224
- JOURNAL OF SPACECRAFT AND ROCKETS, vol.29, no.5, Octobre 1992, WASHINGTON DC, USA pages 668 - 670 SANTANGELO, A. ET AL. 'OPTIMAL WING CONFIGURATION OF A TETHERED SATELLITE SYSTEM IN FREE MOLECULAR FLOW'

## Description

L'invention a pour sujet un satellite artificiel muni de gouvernes aérodynamiques pour commander l'orientation de ce satellite.

Elle s'applique plus précisément aux satellites artificiels dont l'orbite est basse, c'est-à-dire dont le périgée est à quelques centaines de kilomètres de la surface du sol, à une altitude où l'air existe à un état raréfié sans qu'on puisse cependant négliger son influence.

Les moyens traditionnels pour orienter les satellites consistent en des roues utilisant l'effet gyroscopique ou la réaction et tournant à une vitesse réglée par des générateurs de couples magnétiques et en des propulseurs à combustible, mais tous ces dispositifs ont l'inconvénient d'être pesants, de consommer de l'énergie en quantité relativement importante quand ils fonctionnent et de ne pas être extrêmement précis, car des vibrations ou des à-coups sont transmis au satellite.

On propose à l'aide de l'invention de remplacer ou de compléter ces dispositifs par des gouvernes, c'est-à-dire des volets à orientation variable qui subissent une résistance de l'air pour orienter le satellite: leur orientation est réglée à volonté pour obtenir un couple aérodynamique permettant de commander l'orientation du satellite; elles peuvent aussi être mises dans une position de repos où elles ont peu d'influence si ce n'est éventuellement un effet bénéfique de protection.

Le document FR-A-2 530 046 décrit un système de commande d'orientation de satellite grâce à la pression solaire, où on fait pivoter deux ailes pointant sur des côtés latéraux du satellite, perpendiculairement au plan de l'orbite pour produire un mouvement autour d'un axe; ces ailes sont munies d'ailettes disposées dans un autre plan pour produire un mouvement autour d'un autre axe.

L'invention est caractérisée sous sa forme la plus générale en ce que le satellite comprend à l'avant et à l'arrière d'un corps principal englobant le centre des masses du satellite des gouvernes de tangage, mobiles en rotation autour d'axes transversaux et situées symétriquement par rapport à un plan longitudinal médian, passant par le centre des masses, du satellite. Les gouvernes de tangage peuvent être constituées de façon à éviter de créer des zones mortes derrière elles, ce qui aurait pour effet de rendre la commande des gouvernes inopérante aux petits angles de déviation de la position de repos ; elles peuvent comprendre pour cela des volets frontaux aux extrémités libres, éloignées du corps principal, ou être formées de panneaux s'épaississant vers les axes transversaux de rotation. Le satellite peut encore être muni, à gauche et à droite, de gouvernes de roulis et de lacet mobiles en rotation autour d'axes transversaux. Il peut alors être orienté suivant tous ses axes, surtout si les gouvernes sont constituées par paires symétriquement par rapport au plan longitudinal médian du satellite et surtout encore s'il y a deux de ces paires, car alors le lacet et le roulis peuvent être commandés indépendamment.

Un troisième aspect de l'invention utilisable en combinaison avec les précédents concerne certains objets tournants tels que des miroirs de visée ou les gouvernes elles-mêmes si nécessaire, car leur commande s'accompagne de couples d'inertie qui déstabilisent le satellite. On prévoit que chaque système constitué par un de ces objets, le moteur qui le meut et la transmission qui relie l'objet au moteur a un moment cinétique total nul quand le moteur meut l'objet. Un tel agencement peut être appliqué bien entendu aux gouvernes elles-mêmes.

On va maintenant passer à la description concrète de l'invention grâce aux figures suivantes annexées à titre illustratif et non limitatif :
- la figure 1 représente schématiquement le satellite en perspective sous coiffe du lanceur,
- la figure 2 représente le satellite déployé en orbite en vue de dessus,
- la figure 3 représente comment le premier système de gouvernes de tangage est actionné,
- la figure 4 représente un système de gouvernes du satellite,
- la figure 5 représente un autre système de gouvernes,
- la figure 6 représente un détail de la figure 5,
- les figures 7A et 7B représentent des courbes de couple de tangage en fonction de la déviation angulaire des gouvernes,
- la figure 8 représente un système de transmission à moment cinétique total nul,
- la figure 9 représente un repère d'axes,
- et les figures 10A et 10B représentent un dernier système de gouvernes du satellite.

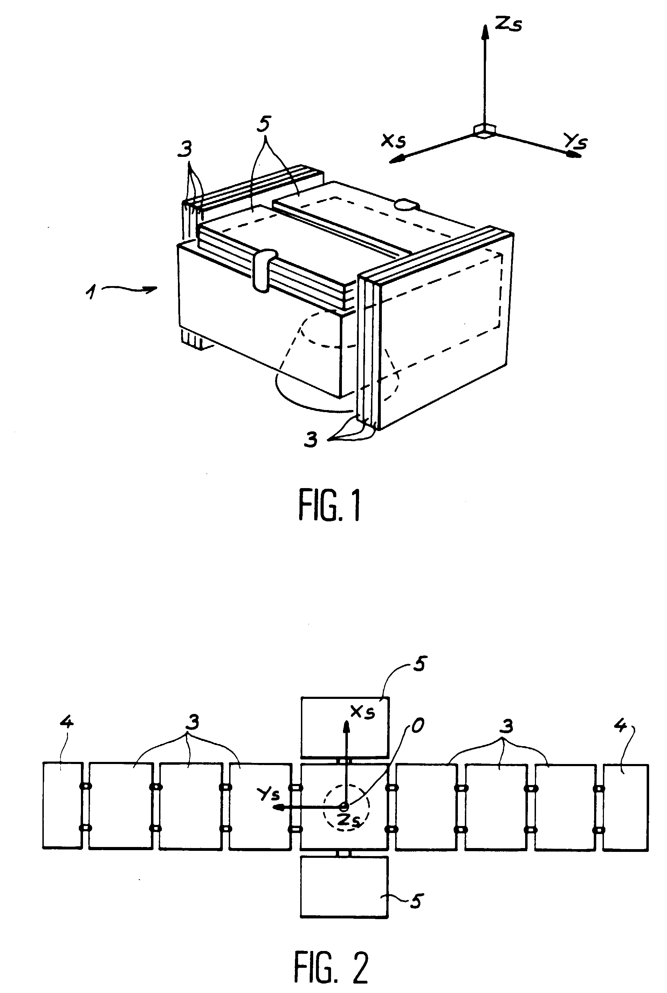

Les figures représentent diverses vues du satellite et divers aspects de l'invention. Un satellite comprend (figures 1 et 2) un centre des masses O et on définit les axes géométriques Xs longitudinal, Ys transversal et Zs vertical concourants en ce point conformément à la figure 2 et liés au satellite ; les axes ont été représentés à l'écart du satellite sur d'autres figures pour des raisons de clarté. Le satellite est composé matériellement d'un corps principal 1 dans lequel le centre des masses O est situé et qui englobe un certain nombre d'équipements non représentés mais usuels tels que des roues d'inertie, des moteurs, des capteurs, de l'électronique diverse, etc., et de panneaux 3 générateurs d'énergie solaire.

On définit encore un repère aérodynamique composé de trois axes X_{A}, Y_{A} et Z_{A}, orthogonal et direct.

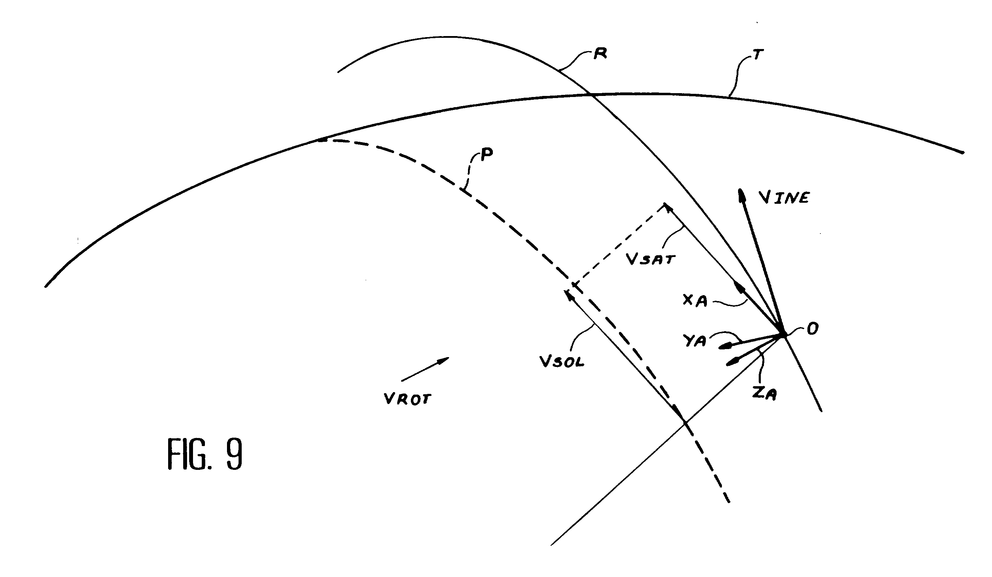

Sur la figure 9, le satellite (symbolisé par le centre des masses 0) parcourt une orbite R dont la trace sur la Terre T, obtenue par une projection verticale, est désignée par la lettre P. La vitesse du satellite sur la trace P est référencée par V_{SOL} et égale à la projection hozirontale de la somme vectorielle de la vitesse inertielle du satellite VINE et de l'opposé de la vitesse de rotation V_{ROT} de la Terre T. Cette somme nommée V_{SAT} correspond à la vitesse aérodynamique du satellite si l'atmosphère est entraînée à la même vitesse que la Terre T, ce qui n'est cependant pas toujours vrai, mais les écarts entre V_{SAT} et la vitesse aérodynamique ne sont normalement pas supérieurs à deux degrés d'angle.

La vitesse V_{SAT}, identique et parallèle à la vitesse V_{SOL} si le satellite est à une altitude constante, est donc confondue avec la vitesse aérodynamique et sert de base à l'axe X_{A}; Y_{A} est horizontal et orienté vers la gauche de l'axe X_{A} et l'axe Z_{A} est descendant (il n'est vertical que si l'axe X_{A} est horizontal). L'orientation normale du satellite est définie quand les axes X_{A} et X_{S}, Y_{A} et Y_{S} et Z_{A} et Z_{S} sont confondus ; le tangage est une rotation du satellite autour du Y_{A}, le roulis une rotation autour de X_{A} et le lacet une rotation autour de Z_{A}. La commande consistera à imposer des angles de rotation des axes X_{S}, Y_{S} et Z_{S} liés au satellite par rapport aux axes X_{A}, Y_{A} et Z_{A} liés à la trajectoire définie par rapport à la Terre pour provoquer des dépointages des axes X_{S}, Y_{S} et Z_{S} par rapport aux axes X_{A}, Y_{A} et Z_{A} ou au contraire les ramener sur eux.

Comme on le représente sur les figures 1 et 2, les panneaux solaires 3 sont empilés les uns sur les autres (sous coiffe du lanceur) ou dépliés en direction transversale, symétriquement des deux côtés du corps principal 1. Le système de fixation des panneaux du générateur solaire est classique ; Les panneaux sont supposés ici fixés chacun en quatre points pour que l'ensemble soit maintenu suffisamment rigide. Conformément à l'invention, le satellite comprend également des gouvernes de roulis et de lacet 4 en forme d'autres panneaux, prolongeant les deux rangées latérales de panneaux solaires 3, et enfin des gouvernes de tangage 5 à l'avant et à l'arrière du corps principal 1, dans le sens de l'axe Xs.

Toutes gouvernes sont de préférence recouvertes d'un revêtements au chrome ou autre ayant la propriété de ne pas absorber l'oxygène atomique qui compose essentiellement l'atmosphère au-delà de 150 km d'altitude mais de le réfléchir et de n'être donc pas attaqué facilement.

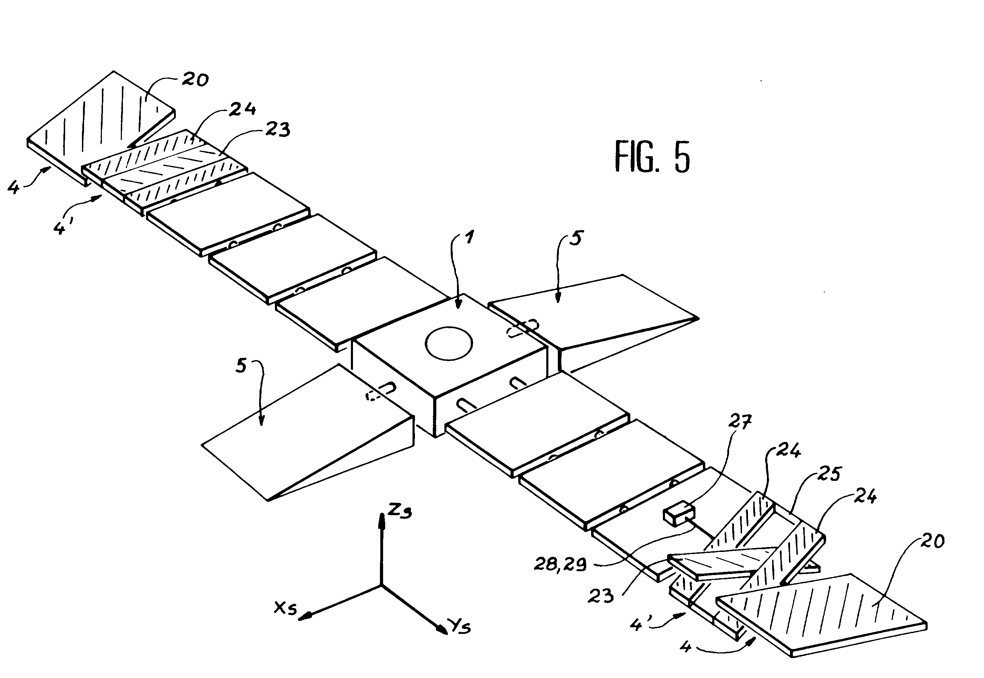

Les panneaux solaires 3 s'étendent à l'état déployé dans le plan défini par les axes longitudinal et transversal Xs et Ys, ou parallèlement à ce plan, de même que les gouvernes 4 et 5 au repos. Les gouvernes de tangage 5 s'étendent de plus symétriquement chacune par rapport au plan longitudinal médian et vertical défini par les axes Xs et Zs. Les gouvernes de roulis et de lacet 4 sont réparties en paires symétriques par rapport à ce même plan dans les réalisations envisagées ici et notamment celle de la figure 5 qui est la plus complète.

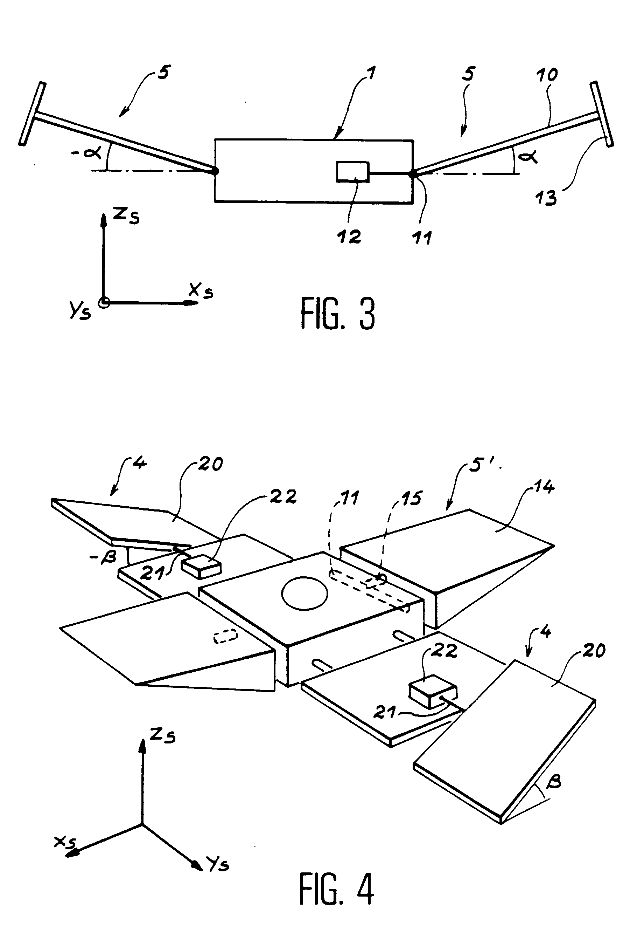

Les gouvernes de tangage 5 peuvent consister, d'après la réalisation de la figure 3, en des panneaux minces 10 d'épaisseur constante, tournant à une extrémité autour d'un axe transversal 11 situé sur le corps principal 1 et muni d'un volet frontal 13 à l'autre extrémité, ou, d'après la figure 4 où elles sont référencées par 5', en des panneaux 14 en forme de coins s'amincissant- vers l'extrémité libre et reliés par leur extrémité épaissie à l'axe transversal 11 par des barres d'écartement 15 qui les éloignent de l'enveloppe du corps principal 1 et permettent de les tourner sans interférence. Car les gouvernes 5 et 5' sont mises en rotation autour des axes transversaux 11, grâce à des moteurs 12 reliés à ces axes par des transmissions non représentées en détail mais qui sont ordinaires et peuvent consister en des trains d'engrenages réducteurs de vitesse.

Le satellite parcourt en général son orbite en direction de l'axe longitudinal Xs qui est alors confondu avec le vecteur X_{A} défini précédemment, et les panneaux solaires 3 sont pointés suivant l'axe Z_{S}.

La rotation des gouvernes 5 et 5', et plus précisément de celle qui est située à l'avant du satellite, produit un obstacle dissymétrique à l'écoulement de l'air raréfié qui environne le satellite et donc un couple autour de l'axe transversal Ys, dont l'intensité est suffisante à des altitudes de quelques centaines de kilomètres pour accomplir assez vite les corrections de tangage souhaitées. Les à-coups sont bien moindres qu'avec les propulseurs et même les roues d'inertie, de sorte que des modifications plus graduelles et mieux commandées sont réalisées.

La valeur du couple et de l'accélération de basculement dépend de l'inclinaison des gouvernes de tangage 5 et 5' qu'on s'est décidée à donner ; la vitesse de rotation des gouvernes peut être de quelques degrés par seconde. L'énergie utilisée est moindre que celle qui est requise pour les dispositifs connus, même si on ajoute l'énergie à fournir pour vaincre la résistance supplémentaire de l'air produite par le basculement des gouvernes et maintenir le satellite à la vitesse voulue.

La surface des gouvernes peut être de quelques mètres carrés.

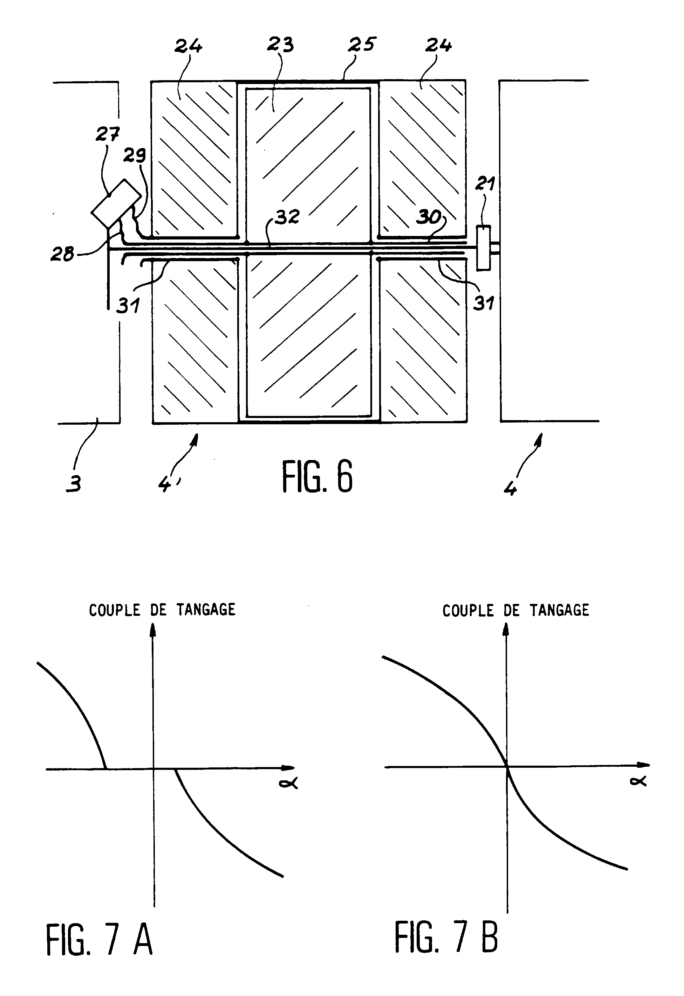

Les gouvernes de tangage pourraient consister simplement en les panneaux 10 en forme de plaques, car on voit bien que la rotation de telles plaques autour de l'axe 11 produirait l'obstacle aérodynamique souhaité et le couple de basculement autour de l'axe transversal Ys. Cependant, si l'angle α de déviation de la position de repos, où les panneaux 10 appartiennent au plan XsYs ou lui sont parallèles, est petit, on constate expérimentalement qu'une zone morte ou de faible commande existe, c'est-à-dire que peu d'effet mesurable de couple est produit. Les volets frontaux 13, orientés dans un plan parallèles aux plans Ys, Zs au repos ont pour fonction de supprimer cette zone et de produire un couple même si l'angle α de rotation est très petit. On comparera sur les courbes jointes des figures 7A et 7B, qui représentent les couples obtenus en fonction de l'angle α pour des panneaux 10 sans et avec un volet frontal 13. La gouverne 5 ou 5' située à l'arrière n'intervient pas directement dans la formation du couple de basculement et pourrait donc rester à la position de repos mais on préfère la basculer d'un angle -α pour la maintenir symétrique à l'autre par rapport au plan transversal et vertical YsZs afin d'annuler le moment dû aux forces d'inertie produites par le basculement des gouvernes. Le basculement de chacune des gouvernes 5 ou 5' produit en effet un moment d'inertie qui se superpose au couple d'origine aérodynamique et dont la valeur exacte peut être difficile à évaluer, mais qu'on peut supposer identique au signe près pour des gouvernes semblables et mues en sens opposés. L'influence de l'inertie peut alors être négligée. Il faut remarquer que des panneaux solaires 3 pourraient faire office de gouvernes mais qu'on préfère utiliser des panneaux nus, plus légers et donc de masse et d'inertie moindre.

La forme en coin des gouvernes de tangage 5' s'oppose à l'apparition d'une zone morte sur la gouverne 5' responsable du basculement.

Un avantage accessoire de ces deux réalisations est que l'enveloppe du corps principal 1 est mieux protégée des attaques de l'oxygène atomique et des petits impacts, car les gouvernes 5 et 5' l'abritent. D'autre part, dans le cas de la solution de la figure 4, les gouvernes 5' procurent un effet aérodynamique qui peut permettre de réduire la consommation d'ergol pour la commande d'orbite dans un rapport de deux à quatre par rapport à l'autre solution.

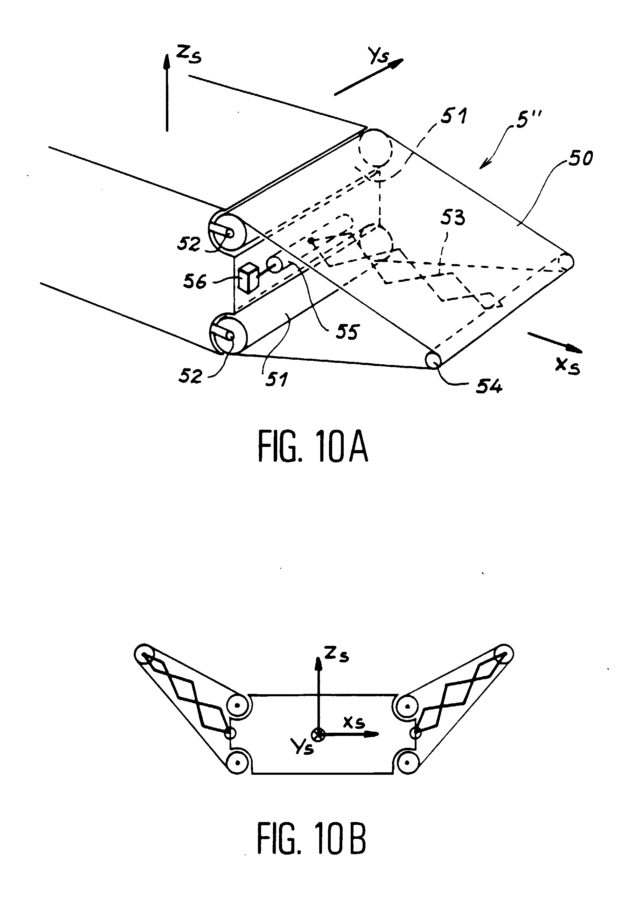

Les figures 10A et 10B représentent une troisième réalisation possible pour les gouvernes de tangage 5", qui consistent alors en une bande de toile 50 tendue comme une tente entre deux rouleaux 51 adjacents au corps central 1, disposés parallèlement à l'axe transversal Ys. Ils tournent autour d'axes 52 proches des arêtes supérieure et inférieure de la face avant ou arrière du corps central 1, mais des ressorts de torsion non représentés sont disposés entre les rouleaux 51 et les axes 52 pour favoriser l'enroulement de la bande de toile 50 autour des rouleaux 51, qu'un bras télescopique 53 autorise quand il est replié. Le bras télescopique 53 est composé de deux lignes de bielles articulées entre elles et à leurs milieux pour dessiner des losanges. Un système qui peut être constitué d'une vis sans fin faisant tourner des secteurs dentés solidaires des bielles extrêmes des deux lignes - comme pour les crics de voiture- assure le redressement ou la rétraction du bras télescopique 53, qui porte à son extrémité opposée au corps central 1 une vergue 54 parallèle aux rouleaux 51 et qui tire et déroule la bande de toile 50 quand elle est éloignée d'eux.

De plus, le bras télescopique 53 est uni au corps central par un arbre transversal 55 dans lequel son mécanisme de commande est logé. Il suffit de faire pivoter l'arbre transversal 55 par un autre moteur 56 pour incliner le bras télescopique 53 vers le haut ou vers le bas et commander ainsi la manoeuvre de la gouverne de tangage 5", grâce à un enroulement différent de la bande de toile 50 autour des rouleaux 52 (figure 10b). La bande de toile 50 est recouverte sur sa face extérieure d'un revêtement résistant à l'oxygène atomique tel qu'on l'a défini plus haut.

Les gouvernes de roulis et de lacet 4 peuvent comprendre sous leur forme la plus simple, illustrée à la figure 4, deux panneaux 20 placés symétriquement par rapport au plan longitudinal médian XsZs et mobiles en rotation autour d'axes transversaux 21 grâce à des moteurs 22. (Une transmission à réduction de vitesse est également interposée entre les panneaux 21 et les moteurs 22). Si, comme on l'a représenté sur la figure, les deux panneaux sont tournés d'angles égaux et opposés +β et -β, un couple résultant est produit autour de l'axe Xs, c'est-à-dire un roulis.

Si on veut produire un lacet, il faut que les plaques 20 soient tournées d'angles différents ou qu'une seule soit tournée, mais l'inconvénient de cette réalisation est qu'un couple de roulis superflu est encore obtenu.

C'est pourquoi on peut préférer aux gouvernes 4 des gouvernes 4' composées d'au moins deux panneaux (figure 5), par exemple d'un panneau médian 23 entouré de deux panneaux extrêmes 24 et solidaires entre eux. Le panneau médian 23 est mû autour d'un axe par un moteur 27, et les panneaux extrêmes 24 sont mus par le même moteur 27. En effet (figure 6), le moteur 27 est à la tête de deux transmissions 28 et 29 qui ont une partie commune et ne sont distinctes que vers deux arbres creux et coaxiaux 30 et 31 qu'elles commandent respectivement : l'arbre creux interne 30 est lié au panneau central 23, et l'arbre creux externe 31 est lié aux panneaux extrêmes 24. Cet arbre creux externe 31 est divisé en deux parties des deux côtés du panneau central 23, mais des entretoises 25 solidarisent les panneaux extrêmes 24 en unissant leurs bords extérieurs ; elles s'étendent un peu au-delà des bords extérieurs du panneau central 23 afin de ne pas gêner les rotations des panneaux 23 et 24.

Les transmissions 28 et 29 consistent en des trains d'engrenages réducteurs semblables à l'exception d'une roue d'inversion de sens de rotation : les panneaux extrêmes 24 sont soumis à des rotations identiques à celles du panneau central 23 mais de sens opposés. Si la surface totale des panneaux extrêmes 24 est semblable à la surface du panneau central 23, l'action aérodynamique résultante est purement longitudinale (suivant l'axe Xs) et engendre un lacet pur.

Un arbre interne 32, autour duquel l'arbre creux interne 30 pivote, relie le panneau solaire 3 adjacent à la gouverne 4' et qui porte le moteur 27 et les transmissions 28 et 29 au moteur 21 de la réalisation de la figure 4. On choisit en effet de cumuler dans la réalisation des figures 5 et 6 les gouvernes 4' et les gouvernes 4 déjà rencontrées, qui sont destinées à commander des roulis purs en étant orientées à des angles opposés.

Les arbres 30, 31 et 32 sont mutuellement soutenus par des coussinets ou des roulements et l'arbre 30 est fixée au panneau solaire 3. L'arbre 22 est soutenu sur le panneau solaire 3 par un palier.

D'autres rapports de rotation du panneau central 23 et des panneaux extrêmes 24 peuvent engendrer un couple de lacet autour de l'axe Zs alors que le couple de roulis résultant est nul, si le rapport de leurs surfaces est différent. Cette propriété de découplage des mouvements dus aux gouvernes composites 4' les distingue des gouvernes simples 4, qui ne peuvent produire de lacet pur comme on l'a déjà constaté.

Le lacet peut être produit avec une seule des gouvernes composites 4', les panneaux de celle qui est située de l'autre côté du corps principal 1 restant au repos. Le roulis est alors commandé soit exclusivement par les gouvernes composites simples 4, soit par des rotations supplémentaires des panneaux des gouvernes 4', ce qui est possible de plusieurs manières et permet d'omettre les gouvernes simples 4, au prix d'une plus grande complexité des commandes (des moteurs différents sont alors nécessaires pour le panneau central 23 et les panneaux extrêmes 24) et éventuellement de difficultés pour maintenir les mouvements de roulis et de lacet découplés.

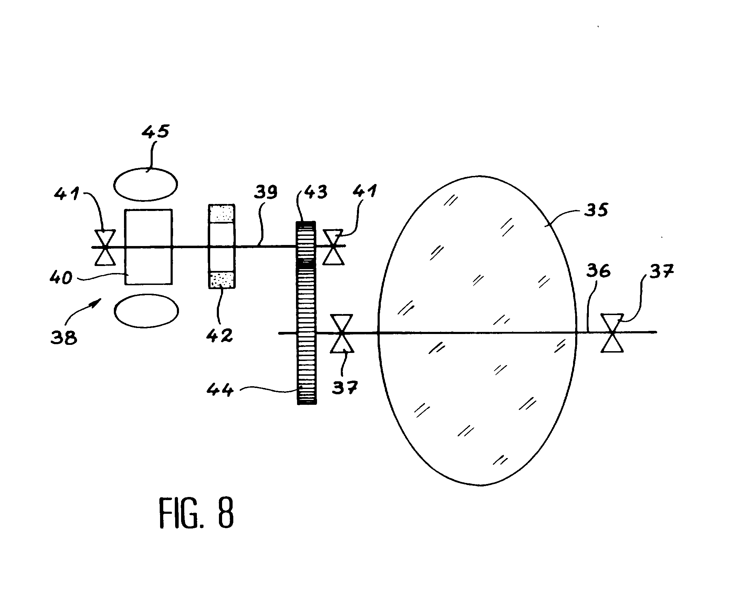

On va maintenant passer à l'examen d'un autre aspect de l'invention à l'aide de la figure 8. Comme on la déjà -signalé rapidement, les satellites artificiels sont munis d'un certain nombre d'objets qu'il convient d'orienter périodiquement, et en particulier de miroirs de visée 35 appartenant à des capteurs dirigés vers la Terre, certains astres ou certains endroits du ciel. Chaque miroir de visée 35 tourne autour d'un axe 36 dont la position est définie par des paliers 37 logés dans le corps principal 1. Un moteur 38 réalise le mouvement de rotation, grâce à une transmission qui comprend un arbre moteur 39 attaché au rotor 40 du moteur 38 et dont la position est définie par des paliers 41, un anneau d'équilibrage dynamique 42 établi le cas échéant sur l'arbre moteur 39, un pignon 43, et une roue dentée 44 s'engrenant dans le pignon 43 est liée à l'axe 36. Si on appelle R le rapport de réduction entre le pignon 43 et la roue dentée 44, il faut selon l'invention que R=Imi/Imo, où Imi est la somme des inerties du miroir de visée 35, de l'axe 36 et de la roue dentée 44, et Imo la somme des inerties du rotor 40, de l'arbre moteur 39, de l'anneau d'équilibrage dynamique 42 et du pignon 43. Si cette relation est respectée, les moments cinétiques des pièces en rotation s'annulent quelle que soit l'amplitude du mouvement du rotor 40 et du miroir de visée 35. Aucun moment cinétique n'est donc transmis au reste du satellite par le stator 45 du moteur 38. L'équilibre du satellite n'est pas perturbé. Il faut bien entendu que l'axe 36 soit parfaitement parallèle à l'arbre 39 et que les jeux mécaniques soient aussi petits qu'il est possible. Ce résultat d'annulation du moment cinétique peut être généralisé à tout nombre impair d'engrenages réducteurs. Une disposition semblable peut bien entendu être adoptée pour d'autres objets tournants tels que les panneaux des gouvernes. La seule condition est que l'axe de rotation soit confondu avec un axe principal d'inertie de l'objet tournant.

## Revendications

1. Satellite artificiel, caractérisé en ce qu'il comprend, à l'avant et à l'arrière, suivant un axe longitudinal (Xs), d'un corps principal (1) englobant le centre des masses (0) du satellite, des gouvernes aérodynamiques de tangage (5, 5', 5") mobiles en rotation autour d'axes transversaux (11), perpendiculaires à l'axe longitudinal, et situées symétriquement par rapport à un plan longitudinal (XsZs) médian, comprenant l'axe longitudinal, perpendiculaire aux axes transversaux (11) et passant par le centre des masses du satellite.

2. Satellite artificiel suivant la revendication 1, caractérisé en ce que les gouvernes de tangage sont constituées de façon à éviter de créer des zones mortes derrière elles.

3. Satellite artificiel suivant la revendication 2, caractérisé en ce que les gouvernes de tangage comprennent des volets frontaux (13) aux extrémités libres, éloignées du corps principal (1).

4. Satellite artificiel suivant la revendication 2, caractérisé en ce que les gouvernes de tangage sont formées de panneaux (14) s'épaississant vers les axes transversaux.

5. Satellite artificiel suivant la revendication 2, caractérisé en ce que les gouvernes de tangage sont composées d'une bande de toile (50) enroulée sur des rouleaux (51) adjacents au corps central (1) et tendue entre les rouleaux par un bras télescopique (53).

6. Satellite artificiel suivant l'une quelconque des revendications 1 à 5, caractérisé en ce qu'il comprend, de deux côtés opposés du corps principal selon le plan longitudinal médian (XsZs), des gouvernes aérodynamiques de roulis et de lacet (4, 4') mobiles en rotation autour d'axes transversaux (21, 31, 32).

7. Satellite artificiel suivant la revendication 6, caractérisé en ce que les gouvernes de roulis et de lacet sont situées par paires symétriquement par rapport au plan longitudinal médian du satellite.

8. Satellite artificiel suivant la revendication 7, caractérisé en ce qu'il comprend au moins deux paires de gouvernes de roulis et de lacet.

9. Satellite artificiel suivant l'une quelconque des revendications 6 à 8, caractérisé en ce que des gouvernes de roulis et de lacet (4') sont conçues pour produire des lacets purs et comprennent deux groupes de panneaux (23, 24) tournés dans des sens opposés par un même moteur (27) commandant deux transmissions (28, 29) menant aux groupes de panneaux respectifs.

10. Satellite artificiel suivant les revendications 8 et 9, caractérisé en ce qu'il comprend une paire de gouvernes (4) mues en sens opposés pour produire des roulis purs.

11. Satellite artificiel suivant l'une quelconque des revendications 1 à 10 et comprenant des objets tournants (35) mus par des moteurs (38) et des transmissions (36, 39), caractérisé en ce que chaque système constitué par un des objets, celui des moteurs qui meut ledit objet et celle des transmissions qui relie ledit moteur audit objet a un moment cinétique nul quand le moteur meut l'objet.

12. Satellite artificiel suivant la revendication 11, caractérisé en ce que les objets tournants comprennent certaines au moins des gouvernes.

## Patentansprüche

1. Künstlicher Satellit, dadurch gekennzeichnet, daß an der Vorderseite und an der Rückseite des Hauptkörpers (1), in dem sich der Massemittelpunkt (0) des Satelliten befindet, entlang der Längsachse (Xs) mobile aerodynamische Nicksteuereinrichtungen (5, 5', 5") angeordnet sind, die sich um die Querachsen (11) drehen, senkrecht zur Längsachse stehen und symmetrisch zur mittleren Längsebene (XsZs) angeordnet sind, wobei die Längsachse in der senkrecht zur Querachse (11) stehenden Längsebene verläuft und den Massemittelpunkt des Satelliten schneidet.

2. Künstlicher Satellit gemäß Anspruch 1, dadurch gekennzeichnet, daß die Nicksteuereinrichtungen so gebaut sind, daß hinter ihnen keine Funkschatten entstehen.

3. Künstlicher Satellit gemäß Anspruch 2, dadurch gekennzeichnet, daß die vom Hauptkörper (1) abgewandten Steuereinrichtungen an den Enden Frontklappen (13) aufweisen.

4. Künstlicher Satellit gemäß Anspruch 2, dadurch gekennzeichnet, daß die Nicksteuereinrichtungen aus Platten (14) zusammengesetzt sind, die sich in Richtung der Querachsen verstärken.

5. Künstlicher Satellit, gemäß Anspruch 2, dadurch gekennzeichnet, daß die Nicksteuereinrichtungen aus einem Leinenband (50) bestehen, das über Rollen (51) nahe dem Hauptkörper (1) gewickelt und zwischen den Rollen durch einen Teleskoparm (53) gehalten wird.

6. Künstlicher Satellit gemäß einem der Ansprüche 1 bis 5, dadurch gekennzeichnet, daß er auf zwei in Bezug auf den Hauptkörper gegenüberliegenden Seiten entlang der mittleren Längsebene (XsZs) aus aerodynamischen Roll- und Giersteuereinrichtungen (4, 4') besteht. die sich um die Querachsen (21, 31, 32) drehen.

7. Künstlicher Satellit gemäß Anspruch 6, dadurch gekennzeichnet, daß die Roll- und Giersteuereinrichtungen paarweise symmetrisch zur mittleren Längsebene des Satelliten angeordnet sind.

8. Künstlicher Satellit gemäß Anspruch 7, dadurch gekennzeichnet, daß er mindestens zwei Paar Roll- und Giersteuereinrichtungen umfaßt.

9. Künstlicher Satellit gemäß einem der Ansprüche 6 bis 8, dadurch gekennzeichnet, daß die Roll- und Giersteuereinrichtungen (4') so konzipiert sind, daß sie reine Gierbewegungen erzeugen und aus zwei Platteneinheiten (23, 24) bestehen. die durch einen Motor (27) im Gegensinn gedreht werden, wobei der Motor zwei Getriebe (28, 29) antreibt, die zu den entsprechenden Platteneinheiten führen.

10. Künstlicher Satellit gemäß einem der Ansprüche 8 und 9, dadurch gekennzeichnet, daß er aus einem Paar Steuereinrichtungen (4) besteht, die zum Erzeugen reiner Rollbewegungen im Gegensinn bewegt werden.

11. Künstlicher Satellit gemäß einem der Ansprüche 1 bis 10, dadurch gekennzeichnet, daß die drehenden Objekte (35) durch Motoren (38) und Getriebe (36, 39) angetrieben werden, und daß jedes System, das aus einem dieser Objekte besteht, sowie jeder Motor, der das genannte Objekt bewegt und jeder Antrieb, der den genannten Motor mit dem genannten Objekt verbindet, einen Drehimpuls von Null besitzt, wenn der Motor das Objekt bewegt.

12. Künstlicher Satellit gemäß Anspruch 11, dadurch gekennzeichnet, daß die drehenden Objekte mindestens einige Steuereinrichtungen enthalten.

## Claims

1. Artificial satellite, characterized in that it comprises, to the front and to the rear, along a longitudinal axis (Xs) of a main body (1) encompassing the centre of mass (O) of the satellite, aerodynamic pitch control surfaces (5, 5', 5") which are movable in rotation around transverse axes (11), perpendicular to the longitudinal axis, and situated symmetrically with respect to a median longitudinal plane (XsZs), comprising the longitudinal axis, perpendicular to the transverse axes (11) and passing through the centre of mass of the satellite.

2. Artificial satellite according to Claim 1, characterized in that the pitch control surfaces are constructed in such a way as to avoid creating dead regions behind them.

3. Artificial satellite according to Claim 2, characterized in that the pitch control surfaces comprise frontal flaps (13) at the free ends, distant from the main body (1).

4. Artificial satellite according to Claim 2, characterized in that the pitch control surfaces are formed from panels (14) which are thicker towards the transverse axes.

5. Artificial satellite according to Claim 2, characterized in that the pitch control surfaces consist of a strip of fabric (50) wound on rollers (51) which are adjacent to the central body (1), the strip being strethced between the rollers by a telescopic arm (53).

6. Artificial satellite according to any one of Claims 1 to 5, characterized in that it comprises, on two sides of the main body along the median longitudinal plane (XsZs), aerodynamic roll and yaw control surfaces (4, 4') which are movable in rotation around transverse axes (21, 31, 32).

7. Artificial satellite according to Claim 6, characterized in that the roll and yaw control surfaces are situated in pairs symmetrically with respect to the median longitudinal plane of the satellite.

8. Artificial satellite according to Claim 7, characterized in that it comprises at least two pairs of roll and yaw control surfaces.

9. Artificial satellite according to any one of Claims 6 to 8, characterized in that the roll and yaw control surfaces (4') are designed to produce pure yaw and comprise two groups of panels (23, 24) turned in opposite directions by the same motor (27) driving two transmissions (28, 29) leading to the respective groups of panels.

10. Artificial satellite according to Claims 8 and 9, characterized in that it comprises a pair of control surfaces (4) moved in opposite directions in order to produce pure roll.

11. Artificial satellite according to any one of Claims 1 to 10 and comprising rotating objects (35) moved by motors (38) and transmissions (36, 39), characterized in that each system consisting of one of the objects, that motor which moves the said object and that transmission which links the said motor to the said object, has a zero kinetic moment when the motor moves the object.

12. Artificial satellite according to Claim 11, characterized in that the rotating objects comprise at least some of the control surfaces.
